Europäisches Patentamt

European Patent Office

Office européen des brevets

(11) Publication number: **0 077 597**
**B1**

(12) **EUROPEAN PATENT SPECIFICATION**

(45) Date of publication of patent specification: **12.03.86**

(51) Int. Cl.⁴: **F 16 K 31/163,** F 16 K 47/00, F 15 B 15/00

(21) Application number: **82201318.1**

(22) Date of filing: **21.10.82**

(54) Device for rotary actuation.

(30) Priority: **21.10.81 NL 8104771**

(43) Date of publication of application:
**27.04.83 Bulletin 83/17**

(45) Publication of the grant of the patent:
**12.03.86 Bulletin 86/11**

(84) Designated Contracting States:
**DE FR GB IT NL SE**

(56) References cited:
**FR-A-1 380 955**
**US-A-2 963 260**
**US-A-3 176 801**
**US-A-3 363 518**

(73) Proprietor: **El-O-Matic B.V.**
**No. 4 Westermaatsweg**
**NL-7556 BT Hengelo (NL)**

(72) Inventor: **Schwind, Heinz Günter**
**No. 40, Kees van Baarenstraat**
**NL-7558 DD Hengelo (Ov.) (NL)**

(74) Representative: **Hoijtink, Reinoud et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for rotational drive as described in the preamble of the claim.

Such a device is known from FR—A—1 380 955. Such a device is employed, for example, for actuating a valve such as a butterfly valve in the fluid duct. These driving devices have a short stroke so that they can quickly close or open the valve. In dependence on the conditions in the fluid duct, for example, the nature of the fluid, the flow rate thereof and the like, an abrupt pressure surge could occur at a rapid close of the valve, which is the reason why the damping means are provided. The damping can be simply adapted to the prevailing conditions by means of the adjustable needle shutter, arranged in the cylinder.

The invention has for its object to provide a device for rotational drive which is of a simple design and can be manufactured more economically.

This is achieved with the measures according to the characterizing part of the claim. By arranging the damping channel and the needle shutter in the piston rod such that it moves back and forth together with the opening and closing movement of the driving piston, instead of the usual immovable mounting to the cylinder, the design of the damping means, and therefore, of the device as a whole, is strongly simplified. The damping cylinder can have a straight forward purely cylindrical shape without any additional bores of fittings. The damping channel only consists of the axial bore and the two transverse bores, and plugging or sealing of superfluous throughgoing parts of bores is omitted.

The invention will now be described more fully with reference to an embodiment of the device in accordance with the invention shown in the figures.

Fig. 1 is a longitudinal sectional view of a device embodying the invention.

Fig. 2 is a partial sectional view taken on the line II in Fig. 1.

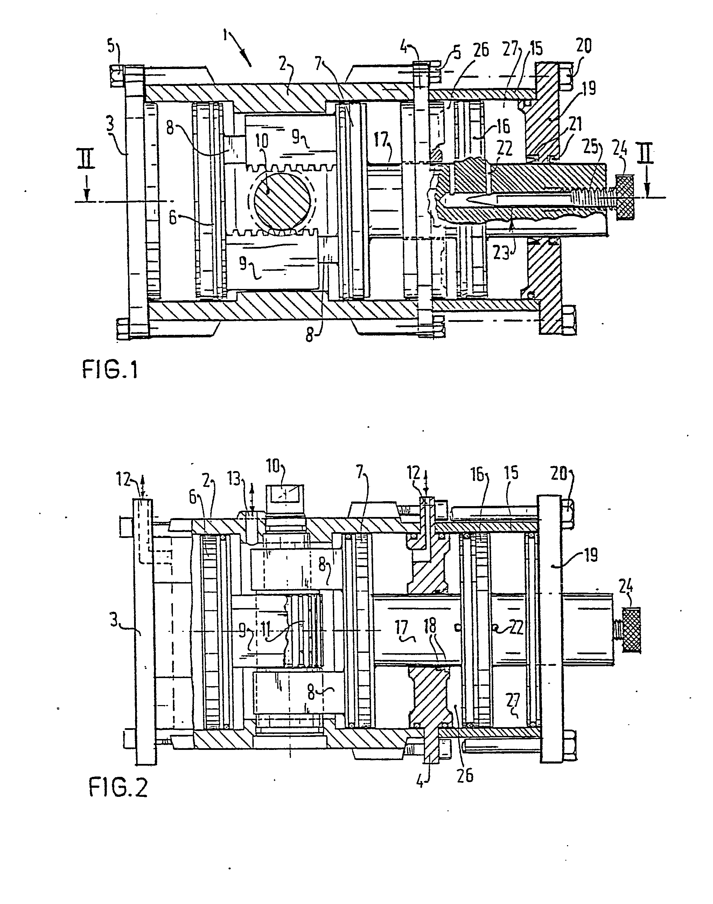

The device 1 shown in Fig. 1 comprises a driving cylinder 2, which is closed at one end by a head wall 3 fastened by bolts 5 and the other end by an intermediate wall 4 also fastened by bolts 5. The cylinder 2 accommodates two driving pistons 6, 7 movable in opposite senses. The driving pistons 6, 7 have each two guide extensions 8 directed towards the opposite piston. The pistons 6, 7 are each provided with a toothed rack 9, which also has a guide function. The toothed rack 9 of each piston 6, 7 is in mesh with a pinion 11 of a driving shaft 10 journalled transversely in the cylinder 2. The cylinder furthermore has inlet and outlet means for pressure medium. The connection 13 communicates with the space between the two pistons 6, 7 whereas the connections 12 communicate with the spaces in the cylinder on the distal sides of the pistons. By feeding pressure medium to the connection 13 the pistons 6, 7 are compelled to move away from one another and the driving shaft 10 is rotated in clockwise direction as viewed in Fig. 1. By feeding pressure medium to the connections 12 the pistons are compelled to approach one another and the driving shaft 10 is turned in the opposite sense.

The driving shaft 10 may be connected, for example, with the shaft of a butterfly valve arranged in a fluid duct. Such a butterfly valve has an effective stroke of 90°. It will be obvious that in such an application the pistons 6, 7 have a short stroke. Consequently the valve connected with the driving shaft 10 can be very rapidly opened or closed. In order to reduce this rapidity the device 1 comprises damping means formed by a damping cylinder 15 in which a damping piston 16 is arranged. The damping cylinder 15 is coaxial with the driving cylinder 2 and arranged on the other side of the partition 4. The damping cylinder 15 is closed by a head wall 19. the cylinder 15 is drawn with the head wall 19 against the partition 4 by bolts 20.

The damping piston 16 is rigidly secured by means of a piston rod 17 to the driving piston 7. The piston rod 17 is sealed with respect to the partition 4 by sealing rings 18. Thus the operative spaces of the driving cylinder 2 and of the damping cylinder 15 are hermetically separated from one another.

The cylinder chambers 26, 27 formed on both sides of the damping cylinder 15 are filled with an appropriate hydraulic oil. The piston rod 17 has a channel 22 through which oil can flow from one chamber to the other chamber 26, 27. The damping force exerted via the piston rod 17 on the piston 7 and hence on the driving shaft 10 depends on the resistance opposed to the oil flow through the channel 22.

In the embodiment shown the flow resistance is adjustable with the aid of a needle shutter 23. The needle shutter 23 is arranged in a sealed part of the piston rod 17 extending across the head wall 19 of the damping cylinder. Sealing is obtained by means of sealing rings 21. The needle 25 of the needle shutter 23 protrudes into the channel 22 and thus impedes the passage of the oil. By turning the adjusting knob 24 the needle 25 will protrude to a greater or lesser extent into the channel 22 so that the damping effect is increased or decreased. In this way damping can match the prevailing conditions.

## Claim

A device (1) for rotational drive comprising a driving cylinder (2) and at least one driving piston (7) connected with a toothed rack (9) and arranged in said driving cylinder, said toothed rack (9) being in mesh with a pinion (11) of a driving shaft (10) extending transversely of the driving cylinder (2), a damping cylinder (15) being connected to the driving cylinder (2) and accommodating a damping piston (16) which is rigidly connected through a piston rod (17) with the driving piston (7), and comprises an opposite piston rod portion being slidable in sealing relationship through a head wall (19) of the damping cylinder (15), said damping piston (16) dividing the damping cylinder (15) into two cylinder chambers (26, 27), which are filled with damping fluid, whilst there is provided a channel (22) interconnecting said chambers, which comprises an adjustable needle shutter (23), characterized in that the channel (22) consists of an axially directed bore in the piston rod and transverse bores in the piston rod at opposite sides of the damping piston (16) and opening out in the axial bore, said axial bore extending from the outwardly extending end of the piston rod (17) and housing the needle (25) of the needle shutter (23) such that an adjusting knob (24) thereof extends from the piston rod end.

## Patentanspruch

Eine Vorrichtung (1) für Drehantrieb, versehen mit einem Antriebszylinder (2) und mindestens einem Antriebskolben (7), der mit einer Zahnstange (9) verbunden und in dem genannten Antriebszylinder angeordnet ist, wobei die genannte Zahnstange (9) in Eingriff ist mit einem Zahnrad (11) einer sich quer durch den Antriebszylinder (2) erstreckenden Antriebswelle, einem Dämpfungszylinder (15), der mit dem Antriebszylinder (2) verbunden ist und einen Dämpfungskolben (16) aufnimmt, der starr durch eine Kolbenstange (17) mit dem Antriebskolben (7) verbunden ist und der einen entgegengesetzten Kolbenstangenteil in abgedichteter Weise verschiebbar durch eine Stirnwand (19) aufweist, wobei der genannte Dämpfungskolben (16) den Dämpfungszylinder (15) in zwei Zylinderkammern (26, 27) unterteilt, die mit einer Dämpfungsflüssigkeit gefüllt sind, und ein die genannten Kammern verbindender Kanal (22) vorgesehen ist, der ein einstellbares Nadelventil (23) aufweist, dadurch gekennzeichnet, daß der Kanal (22) aus einer axial gerichteten Bohrung in der Kolbenstange und aus sich auf die axiale Bohrung öffnenden Querbohrungen in der Kolbenstange auf beiden Seiten des Dämpfungszylinders besteht, wobei sich die genannten axialen Bohrungen von dem sich nach außen erstreckenden Ende der Kolbenstange (17) an erstreckt und die Nadel (25) des Nadelventils (23) so enthält, daß sich davon ein Einstellknopf (24) vom Ende der Kolbenstange erstreckt.

## Revendication

Dispositif (1) d'entraînement en rotation comprenant un cylindre d'entraînement (2) et au moins un piston d'entraînement (7) relié à une crémaillère (9) et disposé dans ledit cylindre d'entraînement, ladite crémaillère (9) étant en prise avec un pignon (11) d'un arbre d'entraînement (10) s'étendant transversalement par rapport au cylindre d'entraînement (2), un cylindre d'amortissement (15) étant relié au cylindre d'entraînement (2) et servant de logement à un piston d'amortissement (16) qui est rigidement relié par l'intermédiaire d'une tige de piston (17) au piston d'entraînement (7) et qui comprend une partie opposée de tige de piston qui traverse de façon coulissante et étanche une paroi frontale (19) duucylindre d'amortissement (15), ledit piston d'amortissement (16) divisant le cylindre d'amortissement (15) en deux chambres de cylindre (26, 27), qui sont remplies de fluide d'amortissement, tandis qu'un canal (22) est prévu, reliant ces chambres, et comprenant un obturateur à pointeau ajustable (23), caractérisé en ce que le canal (22) consiste en un alésage dirigé axialement dans la tige de piston et en des alésages transversaux dans la tige de piston sur des côtés opposés du piston d'amortissement (16) débouchant dans l'alésage axial, ledit alésage axial s'étendant à partir de l'extrémité dirigée vers l'extérieur de la tige de piston (17) et servant de logement au pointeau (25) de l'obturateur à pointeau (23) de telle sorte qu'un bouton de réglage (24) soit en saillie à l'extrémité de la tige de piston.

FIG.1

FIG.2